**Europäisches Patentamt**

**European Patent Office**

**Office européen des brevets**

(11) Veröffentlichungsnummer: **0 141 895**
**B1**

(12) **EUROPÄISCHE PATENTSCHRIFT**

(45) Veröffentlichungstag der Patentschrift:
**09.03.88**

(21) Anmeldenummer: **84103991.0**

(22) Anmeldetag: **10.04.84**

(51) Int. Cl.⁴: **B 64 C  39/02**

(54) **Luftfahrzeug mit durch Verschwenken faltbaren Tragflügeln.**

(30) Priorität: **11.10.83  DE 3336847**

(43) Veröffentlichungstag der Anmeldung:
**22.05.85 Patentblatt 85/21**

(45) Bekanntmachung des Hinweises auf die Patenterteilung:
**09.03.88 Patentblatt 88/10**

(84) Benannte Vertragsstaaten:
**FR GB IT**

(56) Entgegenhaltungen:
**DE - A - 2 935 044**
**US - A - 3 633 846**
**US - A - 4 090 684**

(73) Patentinhaber: **Messerschmitt-Bölkow-Blohm GmbH,**
**Hünefeldstrasse 1-5, D-2800 Bremen 1 (DE)**

(72) Erfinder: **Höppner, Hans-Jochen, Klugkiststrasse 15,**
**D-2800 Bremen (DE)**
Erfinder: **Krämer, Uirich, Schwalbenstrasse 8,**
**D-2808 Syke-Barrien (DE)**
Erfinder: **Sölter, Michael, Ellener Dorfstrasse 18,**
**D-2800 Bremen (DE)**

ACTORUM AG

## Beschreibung

Die Erfindung bezieht sich auf ein Luftfahrzeug mit durch Verschwenken faltbaren Tragflügeln sowie zwischen den Tragflügelteilen und/oder dem Rumpf angreifenden Federvorrichtungen zum automatischen Entfalten der Tragflügel.

Luftfahrzeuge dieser Art sind zum Beispiel aus der DE-A-2 935 044 bekannt. Es handelt sich dabei um sogenannte Drohnen, die aus Containern mit einer Boosterrakete (Boosterstart) gestartet werden. Die in den Containern zu lagernden Fluggeräte müssen daher mit faltbaren und/oder schwenkbaren Tragflügeln versehen sein, da sich nur auf diese Weise eine hinreichende Packungsdichte zur Lagerung erzielen lässt.

Bei solchen Luftfahrzeugen besteht aber der Wunsch, diese ohne vorbereitende Massnahmen vollautomatisch aus den Containern zu starten und daher können die Tragflügel nur ausserhalb der Container während der Boosterphase entfaltet werden. Diese Boosterphase ist aber mit knapp einer Sekunde zu kurz, so dass der durch Beschleunigungs- und Windkräfte beeinträchtigte Entfaltungsvorgang grosse Stellkräfte zum hinreichend schnellen Aufklappen der Tragflügel erfordert. In Verbindung mit den zu bewegenden Massen der Tragflügel und den grossen Klappgeschwindigkeiten der Entfaltungsvorgänge ergeben sich relativ grosse Beträge für die aufzuwendende Energie, die, um Beschädigungen zu vermeiden, vor Ende der Entfaltungsvorgänge absorbiert werden muss.

Zum Entfalten der Tragflügel sind, wie aus der DE-A-2 935 044 bekannt, innerhalb der Flügel- oder Rumpfstruktur Antriebsmechanismen, insbesondere Federn vorgeschlagen, die aber aufgrund der Raumbeschränkungen keine hinreichenden Hebelarme für die Drehbewegung der Flügelentfaltung gestatten. Infolge dieser Tatsache hätten die zur Flügelentfaltung dann notwendigen Kräfte Grössenordnungen verlangt, die im Bereich der zulässigen Materialbeanspruchungen liegen. Da dies aber unzulässig ist, lassen sich mit den zulässigen Kräften und den geringen Hebelarmen nur Drehmomente erzeugen, welche lediglich in der Lage sind, Störmomente, zum Beispiel die von den aerodynamischen Kräften stammenden Störmomente, zu überwinden. Solche Antriebsmechanismen würden nicht nur unbefriedigende (zu langsame) Entfaltungsvorgänge auslösen, sondern auch Zwangskopplungen zwischen den Bewegungen der beiden Tragflügel erfordern. Das aber würde, insbesondere bei kleinem Fluggerät, wie Drohnen, zusätzliches Gewicht sowie das in Schwerpunktnähe benötigte Kraftstoffvolumen beanspruchen.

Neben dem Entfalten von Tragflügeln mit Federvorrichtungen ist es auch bekannt, Flossen an Geschossen, Bomben oder Raketen mit Gasdruck zu verstellen. So zeigt die US-A-3 633 846 eine zweigeteilte Geschossflosse, deren äusserer Flossenteil aus einer Kammer eines starren Flossenteils mit Gasdruck ausfaltbar ist. Bei dieser Flosse besteht das äussere Flossenteil aus einem aufblasbaren Balg, z.B. aus beschichtetem «Nylon», dessen Steifigkeit allenfalls bei niedrigen Geschwindigkeiten ausreichend ist.

Der Erfindung liegt daher die Aufgabe zugrunde, eine Federvorrichtung vorzusehen, welche das Entfalten von Tragflügeln mit hinreichender Kraft und hinreichender Stellgeschwindigkeit ermöglicht. Gemäss der Erfindung ist diese Aufgabe dadurch gelöst, dass für die Federvorrichtungen ausserhalb der Flügelstruktur angeordnete Gasdruckfedern (14) mit starker Enddämpfung vorgesehen sind, und dass die Anschlusselemente (15) der Gasdruckfedern (14) derart an den Flügelteilen (12', 12", 13', 13") bzw. an einem Flügelteil und dem Rumpf angreifen, dass sie nach dem Entfaltungsvorgang zusammen mit den Gasdruckfedern abwerfbar sind.

Die erfindungsgemässe Massname hat den Vorteil, dass die Gasdruckfeder neben ihrer Wirkung als Feder mit relativ grosser Federkonstante gleichzeitig als Dämpfer wirkt, um die Bewegungsenergie unmittelbar vor Ende des Entfaltungsvorganges zu absorbieren. In Weiterbildung der Erfindung ist es zweckmässig, die Gasdruckfedern ausserhalb der Flügelstruktur anzuordnen und die Anschlusselemente der Gasdruckfedern lösbar an den Flügelteilen anzubringen. Hierdurch ist es einerseits möglich, die Gasdruckfedern mit entsprechenden Hebelarmen an den Flügelteilen anzulenken und andererseits nach dem Entfaltungsvorgang zu entfernen.

In diesem Zusammenhang ist es weiterhin zweckmässig, die Anschlusselemente der Gasdruckfedern als in Bohrungen der Flügelstruktur steckbare Bolzen auszubilden, welche nach einem Entfaltungsvorgang ein automatisches Abwerfen der Gasdruckfedern erlauben. Hierdurch ergeben sich nicht nur schnelle und einwandfreie Entfaltungsvorgänge, sondern es entsteht darüber hinaus durch das Abwerfen keine Gewichtszunahme bzw. keine Volumenminderung und Widerstandserhöhung.

Die Erfindung wird anhand der beiliegenden Zeichnung näher erläutert. Es zeigen:

Fig. 1 ein in einem Container gelagertes Luftfahrzeug mit gefalteten Tragflügeln und

Fig. 2 einen Ausschnitt eines Luftfahrzeuges mit entfaltetem Tragflügel.

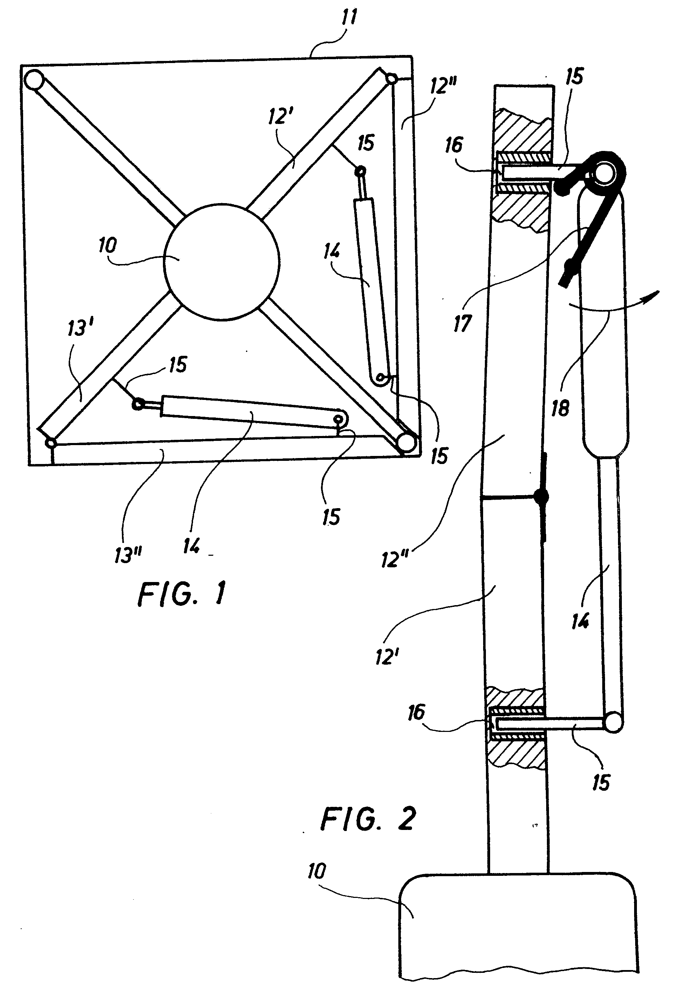

In Fig. 1 ist ein Luftfahrzeug 10 zu sehen, das in einem als Lager- und Transportbehälter dienenden Container 11 untergebracht ist. Die Tragflügel 12, 13 dieses Luftfahrzeuges sind etwa in der Mitte ihrer Halbspannweite geteilt und mittels Scharnieren miteinander verbunden. Wie in Fig. 1 zu sehen, lassen sich daher die Tragflügel 12, 13 falten und das Luftfahrzeug 10 auf engem Raum im Container 11 unterbringen.

Aus der Darstellung nach Fig. 1 ist weiterhin zu erkennen, dass zwischen den inneren und äusseren Tragflügeln 12', 12", 13', 13", und zwar auf den Unterseiten, jeweils eine zum Entfalten der Tragflügel dienende Gasdruckfeder 14 angeordnet ist. Diese Gasdruckfedern 14 sind mit Anschlusselementen an den Tragflügeln 12, 13 angebracht, deren Einzelheiten in Fig. 2 dargestellt sind.

In der Darstellung nach Fig. 2 ist ein Ausschnitt des Luftfahrzeuges 10 nach Fig. 1 unmittelbar nach dem Start mit entfaltetem Tragflügel 12 zu sehen. Die Entfaltung wurde nach dem Verlassen des Containers durch Boosterabschuss durch die Gasdruckfeder 14 bewirkt. Diese Gasdruckfeder ist mittels Anschlussbolzen 15, die in Bohrungen 16 auf der Unterseite der Tragflügelteile 12 gesteckt sind, angebracht. Diese Anschlussart hat den Vorteil einer schnellen und leichten Lösung, so dass die Gasdruckfedern 14 nach dem Start abwerfbar sind. Diesem Zweck dient auch eine Schenkelfeder 17, welche zwischen der Gasdruckfeder 14 und dem am äusseren Tragflügel 12″, 13″ angelenkten Anschlussbolzen 15 angebracht ist. Hierdurch wird nach dem Entfalten, und zwar dann, wenn die Gasdruckfeder kraftlos geworden ist, das Abwerfen eingeleitet, und zwar in Richtung des Pfeiles 18. Damit wird sichergestellt, dass die Gasdruckfedern in eine vom Luftfahrzeug 10 abweisende Richtung abgeworfen werden, so dass die zum Antrieb vorgesehenen Heckschrauben davon unberührt bleiben.

Die Gasdruckfedern 14 müssen bezüglich der erforderlichen Klappmomente für die Tragflügel so ausgewählt werden, dass die von aussen auf den Entfaltungsvorgang wirkenden Störmomente von untergeordneter Bedeutung werden. Hierdurch wird ein gleich schneller Entfaltungsvorgang für beide Tragflügel ohne Zwangskopplung möglich. Die Gasdruckfeder mit starker Enddämpfung vereinigt Feder und Dämpfer in einem Bauteil, das durch Abwurf nach dem Entfalten keine Gewichtserhöhung bzw. Volumenminderung bedeutet. Der Einsatz einer hinreichend starken Schenkelfeder 17 sichert dabei auch Abwürfe der Gasdruckfedern gegen die Erdanziehung und erlaubt eine Montage der Gasdruckfedern auch auf den Oberseiten der Tragflügel. Eine geeignete Bemessung der Anschlussbolzen gestattet dabei hinreichende Kippmomente zwischen Gasdruckfeder und Schenkelfeder, um damit selbstsichernde Haltekräfte zu erzielen, so dass zusätzliche, in Abhängigkeit der Flügellage zu steuernde Verriegelungen nicht erforderlich sind.

**Patentansprüche**

1. Luftfahrzeug mit durch Verschwenken faltbaren Tragflügeln sowie zwischen den Tragflügelteilen und/oder dem Rumpf angreifenden Federvorrichtungen zum automatischen Entfalten der Tragflügel, dadurch gekennzeichnet, dass für die Federvorrichtungen ausserhalb der Flügelstruktur angeordnete Gasdruckfedern (14) mit starker Enddämpfung vorgesehen sind, und dass die Anschlusselemente (15) der Gasdruckfedern (14) derart an den Flügelteilen (12′, 12″, 13′, 13″) bzw. an einem Flügelteil und dem Rumpf angreifen, dass sie nach dem Entfaltungsvorgang zusammen mit den Gasdruckfedern abwerfbar sind.

2. Luftfahrzeug nach Anspruch 1, dadurch gekennzeichnet, dass die Anschlusselemente der Gasdruckfedern (14) als in Bohrungen (16) der Flügelstruktur und/oder Rumpfstruktur steckbare Bolzen (15) ausgebildet sind, die nach dem Entfaltungsvorgang ein automatisches Abwerfen der Gasdruckfedern (14) erlauben.

3. Luftfahrzeug nach Anspruch 1 oder 2, dadurch gekennzeichnet, dass zwischen einem Anschlussbolzen (15) und der Gasdruckfeder (14) eine Schenkelfeder (17) angeordnet ist, welche das Abwerfen der Gasdruckfeder (14) in eine vom Luftfahrzeug (10) abweisende Richtung lenkt.

**Claims**

1. Aircraft having a foldable wing operated by swivelling and having spring arrangements engaging between the parts of the wing and/or the fuselage for the automatic unfolding of the wing, characterised in that gas pressure springs (14) having strong end damping are provided as the spring arrangements outside the wing structure, and that the connector elements (15) of the gas pressure springs (14) are engaged with the wing parts (12′, 12″, 13′, 13″) or between a wing part and the fuselage so that after the unfolding procedure they, together with the gas pressure springs, can be dumped.

2. Aircraft according to claim 1, characterised in that the connector elements of the gas pressure springs (14) are formed as pins (15) which can be inserted in bores (16) in the structure of the wing and/or the fuselage, which after the unfolding process allow automatic dumping of the gas pressure springs (14).

3. Aircraft according to claim 1 or 2, characterised in that between a connecting peg (15) and the gas pressure spring (14) there is arranged a swivel spring (17) which acts to dispose of the gas pressure spring (14) in a direction away from the aircraft.

**Revendications**

1. Aéronef comportant des ailes portantes repliables par basculement ainsi que des dispositifs à ressort agissant entre les parties d'ailes portantes et/le fuselage pour déployer automatiquement les ailes portantes, caractérisé en ce que les dispositifs à ressort sont constitués par des ressorts à gaz (14) prévus à l'extérieur de la structure des ailes et auxquels sont intégrés de puissants amortisseurs de fin de course, et en ce que les éléments de raccordement (15) des ressorts à gaz (14) attaquent les parties d'ailes (12′, 12″, 13′, 13″) ou une partie d'aile et le fuselage de façon qu'après la phase de déploiement ils soient éjectables avec les ressorts à gaz.

2. Aéronef selon la revendication 1, caractérisé en ce que les éléments de raccordement des ressorts à gaz (14) sont des goujons (15) susceptibles d'être introduits dans des perçages (16) de la structure d'aile et/ou de la structure de fuselage, goujons qui, après la phase de déploiement, permettent une éjection automatique des ressorts à gaz (14).

3. Aéronef selon les revendications 1 ou 2, caractérisé par un ressort à branches (17) prévu entre un goujon de raccordement (15) et le ressort à gaz (14), ressort qui dirige l'éjection du ressort à gaz (14) dans une direction s'écartant de l'aéronef (10).

FIG. 1

FIG. 2